# EUROPÄISCHE PATENTSCHRIFT

(11) **EP 0 416 422 B1**
(45) Veröffentlichungstag und Bekanntmachung des Hinweises auf die Patenterteilung: **25.05.1994**
(21) Anmeldenummer: 90116409.5
(22) Anmeldetag: 27.08.1990
(51) Int. Cl.: H02H 3/33

(54) **Differenzstromschutzschalter**
Differential current circuit-breaker
Disjoncteur à courant différentiel

(30) Priorität: 07.09.1989 DE 3929783
(43) Veröffentlichungstag der Anmeldung: 13.03.1991
(73) Patentinhaber: SIEMENS AKTIENGESELLSCHAFT, 80333 München (DE)
(72) Erfinder: Pohl, Fritz, Dipl.-Phys., D-8551 Hemhofen (DE); Kleemeier, Manfred, Dipl.-Ing., D-8402 Neutraubling (DE)

(56) Entgegenhaltungen:
- EP-A- 0 177 879
- EP-A- 0 273 255
- DE-A- 2 555 303
- US-A- 3 700 967

## Beschreibung

Die Erfindung bezieht sich auf einen allstromsensitiven Differenzstromschutzschalter (DI-Schalter) mit einem Summenstromwandler als von einem Fehlerstrom gesteuerte Induktivität, die mit einer Meßkapazität einen Reihenschwingkreis bildet, dessen aus einem Rechteckgenerator aufgenommene Leistung sich mit der Amplitude des Fehlerstromes ändert. Zur Auswertung des Fehlerstromes ist dessen Meßkapazität mit einem aus Dioden gebildeten Doppelweggleichrichter mit zwei Ausgängen an die beiden Ausgänge eines Komparators angeschlossen.

Zum Schutz gegen gefährliche Körperströme sind bekanntlich spannungsunabhängige Fehlerstromschutzschalter (FI-Schalter) oder netzspannungsabhängige Differenzstromschutzschalter (DI- Schalter) vorgesehen, die im Fehlerfall den Stromkreis in kurzer Zeit, beispielsweise innerhalb 0,2 s, abschalten. Eine bekannte Ausführungsform eines derartigen DI-Schalters enthält einen Summenstromwandler, dessen Magnetisierungszustand mit Hilfe einer Wechselstromvormagnetisierung abgefragt wird. Der Fehlerstrom ändert das Signal im Sekundärkreis des Summenstromwandlers und diese Signaländerung wird zur Auslösung des DI- Schalters verwendet. Ein solcher Differenzstromschutzschalter ist aus der DE-A-25 55 303 bekannt. Ein entsprechender allstromsensitiver Differenzstromschutzschalter, bei dem eine Auslöseeinrichtung von einer Auswerteschaltung und einem dieser zugeordneten für Stoßströme bzw. Stoßspannungen ansprechenden Sensor angesteuert wird, ist in der EP-A-0 273 255 beschrieben. Der Sekundärkreis des Summenstromwandlers soll dort eine Meßkapazität enthalten, die mit der Induktivität des Summenstromwandlers einen Schwingkreis bildet, dessen aufgenommene elektrische Leistung sich mit der Amplitude des Fehlerstromes ändert. Die Spannungsänderung am Meßkondensator kann durch eine Meß- und Auswerteschaltung erfaßt werden, die einen Gleichrichter enthält. Bei der EP-A-0 273 255 ist dieser Gleichrichter in Kombination mit einem Integrierglied beispielsweise durch eine Villard-Schaltung realisiert, wobei das Ausgangssignal über einen gegen Bezugspotential schaltbaren Koppelschalter freigegeben und weiterverarbeitet wird.

Bei einem in der US-A-3 700 967 für Fehlerwechselströme beschriebenen sogenannten Erdschlußwächter wird ein Transistor zur Erfassung eines Schwellwertes verwendet. Dabei wird dem Emitter des Transistors das Fehlerstromsignal über einen Doppelweggleichrichter zugeführt. Die Basis des Transistors wird über zwei in Reihe geschaltete Dioden durch eine temperaturabhängige Basisspannung angesteuert. Dabei geht in die Auswerteschaltung der Spannungswert direkt als Änderung der Basis-Emitter-Spannung ein.

Bei Verwendung von Doppelweggleichrichtern bei der bekannten Meß- und Auswerteschaltung wären Vorspannungswiderstände in Reihe zu schalten und ein vorhandener Komparator symmetrisch anzusteuern, damit dessen Ausgangssignal dem Auslöser des Fehlerstromschutzschalters zugeführt werden kann.

Ausgehend vom obigen Stand der Technik liegt der Erfindung die Aufgabe zugrunde, durch geeignete Maßnahmen die Temperaturabhängigkeit des Gleichrichters, die zur Temperaturabhängigkeit der Auslösung des Differenzstromschutzschalters führt, zu kompensieren.

Die Lösung dieser Aufgabe erfolgt erfindungsgemäß mit den Gestaltungsmerkmalen des Anspruchs 1. Mit dem temperaturabhängigen Kompensationsstrom wird dem Fehlerstrommeßsignal am Eingang des Komparators eine Vorspannung überlagert, so daß die Spannung an den Eingängen des Komparators unabhängig von Temperaturänderungen konstant bleibt, solange kein Fehlerstrom fließt. Die Änderung der Auslöseempfindlichkeit bei einer Temperaturänderung wird somit durch eine entsprechende Änderung der empfindlichkeitsmindernden Vorspannung kompensiert.

Der Kompensationsstrom kann vorzugsweise von einem der Meßschaltung parallelgeschalteten Spannungsteiler geliefert werden, der als temperaturabhängigen Widerstand wenigstens ein Gleichrichterelement enthält. Durch den Kompensationsstrom bleibt die Potentialdifferenz am Eingang des Komparators konstant, solange kein Fehlerstrom auftritt.

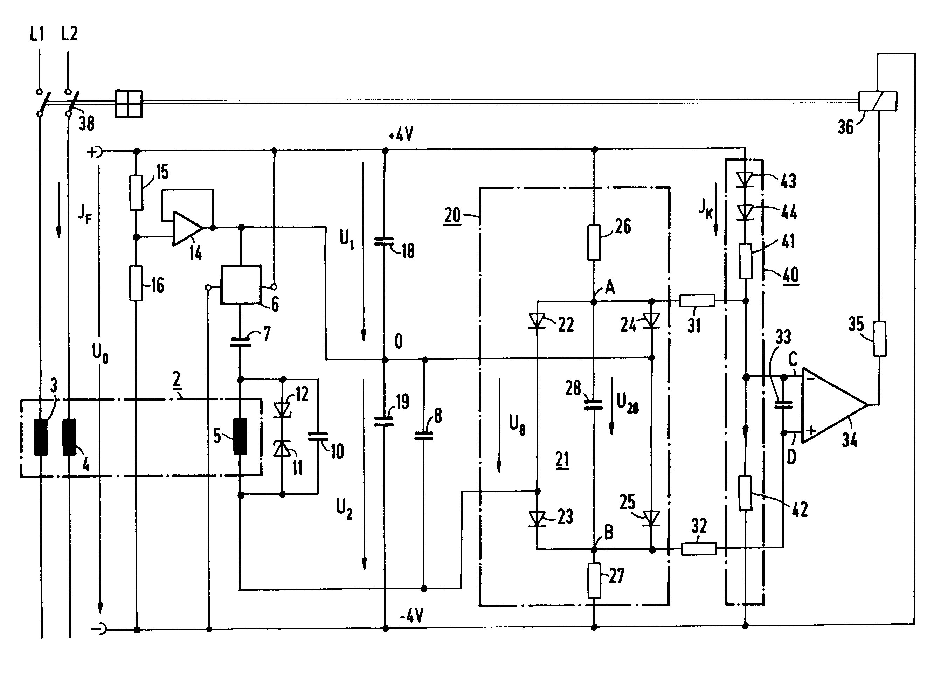

Zur weiteren Erläuterung der Erfindung wird auf die Zeichnung Bezug genommen, in der ein Ausführungsbeispiel eines Differenzstromschutzschalters gemäß der Erfindung schematisch veranschaulicht ist.

Der in der Figur dargestellte Differenzstromschutzschalter überwacht zwei Netzleiter L1 und L2, die jeweils eine Primär wicklung 3 bzw. 4 eines Summenstromwandlers 2 bilden. Der Sekundärkreis des Summenstromwandlers 2 enthält eine Reihenschaltung einer Sekundärwicklung 5 mit einem Rechteckgenerator 6, dessen Frequenz im allgemeinen wenigstens etwa 500 Hz, beispielsweise 1000 Hz, betragen kann, und einem Blockkondensator 7, der nach Erreichen seiner stationären Spannung nur Wechselströme durchläßt und Gleichstromkomponenten sperrt sowie einen Meßkondensator 8. Der Sekundärkreis des Summenstromwandlers 2 ist über einen rückgekoppelten Verstärker 14 und einen Spannungsteiler mit Widerständen 15 und 16 an eine Versorgungsspannung Uₒ von beispielsweise 8 V angeschlossen. Der Verstärker 14 erzeugt aus der Versorgungsspannung Uₒ Teilspannungen U₁ = 4 V positiv gegen Null und U₂ = 4 V negativ gegen Null, wie es in der Schaltung durch entsprechende Richtungspfeile angedeutet ist. Diese Teilspannungen U₁ werden geglättet durch Glättungskondensatoren 18 bzw. 19.

Die mit einem Fehlerstrom veränderbare Spannung U₈ am Meßkondensator 8 wird einer Meßschaltung 20 als Eingangsspannung vorgegeben, die einen Doppelweggleichrichter 21 mit Dioden 22 bis 25 enthält. Die Meßschaltung 20 enthält ferner zwei Vorspannungswiderstände 26 und 27 und einen dem Ausgang parallelgeschalteten Glättungskondensator 28. Das Ausgangssignal der Meßschaltung 20 wird über Integrationswiderstände 31 und 32 einem Komparator 34 zugeführt, dessen Eingang eine Integrationskapazität 33 parallelgeschaltet ist. Das Ausgangssignal des Komparators 34 wird über einen Begrenzungswiderstand 35 dem Auslöser 36 eines Differenzstromschutzschalters 38 zugeführt. Die Versorgungsspannung des Rechteckgenerators 6 und des Komparators 34 sowie die Vorspannung und der Kompensationsstrom des Komparators 34 werden von dem rückgekoppelten Verstärker 14 mit den Teilwiderständen 15 und 16 geliefert.

Zur Lieferung des Kompensationsstromes I_{K} kann vorzugsweise ein Spannungsteiler 40 mit Spannungsteilerwiderständen 41 und 42 vorgesehen sein, der an die Versorgungsspannung U_{O} angeschlossen und der Meßschaltung 20 parallelgeschaltet ist und wenigstens einen temperaturabhängigen Widerstand enthält. Als temperaturabhängiger Widerstand kann in einfacher Weise wenigstens eine Diode vorgesehen sein. In der dargestellten Anordnung mit den Dioden 22 bis 25 in der Meßschaltung 20, in der jeweils zwei Dioden 22 und 23 bzw. 24 und 25 in Reihe geschaltet sind, kann als temperaturabhängiger Widerstand eine Reihenschaltung von zwei Dioden vorgesehen sein, die in der Figur mit 43 und 44 bezeichnet sind. Diese Dioden 43 und 44 sind so gestaltet, daß die Änderung ihrer Durchlaßspannung mit der Temperatur dem Einfluß der Durchlaßspannung der Dioden 22 bis 25 auf das Ausgangssignal der Meßschaltung 20 entgegenwirkt.

Wird ein Fehlerstrom auf die Sekundärwicklung 5 übertragen, so wird der Leistungsbedarf des Schwingkreises aus der Induktivität des Summenstromwandlers 2 und der Meßkapazität 8 erhöht und vom Rechteckgenerator 6 eine entsprechend erhöhte Leistung abgegeben. Mit der Erhöhung dieser abgegebenen Leistung wird der Strom des Rechteckgenerators 6 und damit auch die Amplitude der Spannung U₈ am Schwingkreiskondensator 8 entsprechend erhöht. Diese Meßspannung U₈ wird im Doppelweggleichrichter 21 gleichgerichtet, durch den Glättungskondensator 28 geglättet und über die Integrationswiderstände 31 und 32 dem Komparator 34 zugeführt. Diese Integrationswiderstände 31 und 32 bilden mit der Integrationskapazität 33 zusätzlich ein Filter für die Ausgangsspannung des Doppelweggleichrichters 21. Der Komparator 34 schaltet den Auslöser 36 in Abhängigkeit von einer vorbestimmten Potentialdifferenz zwischen seinem negativen Eingang C und seinem positiven Eingang D. Der Schwellwert für das Durchschalten des Komparators 34 wird wesentlich bestimmt durch die Vorspannungswiderstände 26 und 27 der Meßschaltung 20. Der Vorspannungswiderstand 26 bewirkt eine geringe positive Spannung am Ausgang A, und der Vorspannungswiderstand 27 eine geringe negative Spannung am Ausgang B des Doppelweggleichrichters 21, die den Schwellwert des Komparators 34 bestimmen.

Die Gesamtspannung der Meßschaltung 20 besteht aus dem Spannungsabfall an den Vorspannungswiderständen 26 und 27 sowie der Durchlaßspannung von jeweils zwei in Reihe geschalteten Dioden, beispielsweise der Dioden 22 und 23 des Doppelweggleichrichters 21, und der durch einen Fehlerstrom I_{F} veränderbaren Meßspannung U₈. Sinkt bei erhöhter Umgebungstemperatur die Durchlaßspannung der Dioden 22 bis 25, so sinkt der Anteil der Vorspannung zwischen den Punkten A und B der Meßschaltung 20 entsprechend. Da diese Vorspannung gegenpolig zum Eingangspotential des Komparators 34 arbeitet, nimmt auch der Ansprechwert des Komparators 34 entsprechend ab.

Um diese Änderung der Vorspannung bei einer Temperaturänderung zu vermeiden, wird der Kompensationsstrom I_{K} über einen temperaturabhängigen Widerstand eingespeist. Der Kompensationsstrom I_{K} ändert sich mit der Temperatur entgegengesetzt zur Vorspannung an der Meßschaltung 20. Durch den Kompensationsstrom I_{K} wird der negative Eingang C des Komparators 34 mit positiver Spannung versorgt. In der dargestellten Ausführungsform des Differenzstromschalters mit jeweils zwei in Reihe geschalteten Dioden 22 und 23 bzw. 24 und 25 des Doppelweggleichrichters 21 enthält der Spannungsteiler 40 ebenfalls eine Reihenschaltung der Dioden 43 und 44 mit der gleichen Durchlaßspannung. Bei erhöhter Temperatur und entsprechend sinkender Durchlaßspannung dieser Dioden 43 und 44 wird der Kompensationsstrom I_{K} entsprechend erhöht und damit die Abnahme der Vorspannung zwischen den Punkten A und B der Meßschaltung 20 kompensiert.

Die Reihenschaltung der Dioden 43 und 44 im Spannungsteiler 40 kann auch durch eine einzige Diode mit entsprechend höherer Durchlaßspannung ersetzt werden.

Zur Kompensation von vorübergehenden Spannungsspitzen im Sekundärkreis des Summenstromwandlers 2, beispielsweise im Falle eines Blitzschlages, kann noch eine Filterkapazität 10 vorgesehen sein. Ferner können der Sekundärwicklung 5 vorzugsweise noch gegeneinandergeschaltete Zehnerdioden parallelgeschaltet sein, die in der Figur mit 11 und 12 bezeichnet sind.

Im Ausführungsbeispiel sind zur Temperaturkompensation als temperaturabhängiger Widerstand die beiden Dioden 43 und 44 vorgesehen. Es können jedoch auch andere temperaturabhängige Widerstände, beispielsweise Heißleiter oder auch Kaltleiter oder auch eine Kombination solcher Widerstände, vorgesehen sein.

## Patentansprüche

1. Allstromsensitiver Differenzstromschutzschalter mit einem Summenstromwandler (2) als von einem Fehlerstrom (I_{F}) gesteuerte Induktivität (5) und einem Rechteckgenerator (6), der über zwei Anschlüsse an eine getrennte Versorgungsspannung angeschlossen ist und mit seinem einen Ausgang mit der Induktivität (5) sowie seinem anderen Ausgang mit einer Meßkapazität (8) verbunden ist, wobei die Induktivität (5) mit der Meßkapazität (8) einen Reihenschwingkreis bildet, dessen aus dem Rechteckgenerator (6) aufgenommene Leistung sich mit der Amplitude des Fehlerstromes (I_{F}) ändert und dessen Meßkapazität (8) mit ihren beiden Anschlüssen mit den Eingängen eines Gleichrichters verbunden sind, dessen Ausgänge an eine Vergleichseinrichtung des Auslösestromkreises geführt sind,
**dadurch gekennzeichnet, daß** die Anschlüsse der Meßkapazität (8) an die Eingänge eines aus Dioden (22 bis 25) gebildeten Doppelweggleichrichters (21) geführt sind, dessen Ausgänge an die beiden Eingänge eines Komparators (34) als Vergleichseinrichtung angeschlossen sind, daß zur Kompensation des Temperaturganges der Dioden (22 bis 25) des Doppelweggleichrichters (21) dem Komparator (34) ein vom Fehlerstrom (I_{F}) unabhängiger Kompensationsstrom (I_{K}) mit temperaturabhängiger Stromhöhe vorgegeben ist, wozu vor dem einen Eingang des Komparators (34) das vom Fehlerstrom abgeleitete Potential mit dem vom Kompensationsstrom (I_{K}) erzeugten Potential gemischt wird.

2. Differenzstromschutzschalter nach Anspruch 1, bei dem die Meßschaltung (20) aus einer Reihenschaltung des Doppelweggleichrichters (21) mit Vorspannungswiderständen (26, 27) besteht, **dadurch gekennzeichnet,** daß parallel zur Meßschaltung (20) ein Spannungsteiler (40) mit Anschlüssen an der getrennten Versorgungsspannung (Uₒ) vorgesehen ist, der wenigstens einen temperaturabhängigen Widerstand enthält und der den Kompensationsstrom (I_{K}) liefert.

3. Differenzstromschutzschalter nach Anspruch 2, **dadurch gekennzeichnet,** daß als temperaturabhängiger Widerstand wenigstens eine Diode (43, 44) vorgesehen ist.

4. Differenzstromschutzschalter nach Anspruch 3, **gekennzeichnet** durch eine Reihenschaltung von Dioden (43, 44) von gleicher Art wie die Dioden (22 bis 25) des Doppelweggleichrichters (21).

## Claims

1. Universal current-sensitive differential current circuit-breaker having a summation current transformer (2) as inductor (5) controlled by a fault current (I_{F}) and a square-wave generator (6) which is connected to a separate supply voltage by way of two terminals and is connected with its one output to the inductor (5) and also with its other output to a measuring capacitor (8), with the inductor (5) forming with the measuring capacitor (8) a series resonant circuit, the power of which, received from the square-wave generator (6), varies with the amplitude of the fault current (I_{F}) and the measuring capacitor (8) of which is connected with its two terminals to the inputs of a rectifier, the outputs of which are run to a comparison unit of the tripping current circuit, characterised in that the terminals of the measuring capacitor (8) are run to the inputs of a full-wave rectifier (21) which is formed from diodes (22 to 25) and the outputs of which are connected to the two inputs of a comparator (34) as a comparison unit, in that for the purpose of compensating for the response of the diodes (22 to 25) of the full-wave rectifier (21) to temperature changes, a compensation current (I_{K}), which is independent of the fault current (I_{F}), having a temperature-dependent current level is prescribed for the comparator (34), for which purpose the potential derived from the fault current is mixed with the potential generated by the compensation current (I_{K}) before the one input of the comparator (34).

2. Differential current circuit-breaker according to claim 1, in which the measuring circuit arrangement (20) consists of a series circuit arrangement of the full-wave rectifier (21) with biasing resistors (26, 27), characterised in that a voltage divider (40) with terminals at the separate supply voltage (Uₒ) is provided parallel to the measuring circuit arrangement (20), which voltage divider contains at least one temperature-dependent resistor and supplies the compensation current (I_{K}).

3. Differential current circuit-breaker according to claim 2, characterised in that at least one diode (43, 44) is provided as a temperature-dependent resistor.

4. Differential current circuit-breaker according to claim 3, characterised by a series circuit arrangement of diodes (43, 44) of the same kind as the diodes (22 to 25) of the full-wave rectifier (21).

## Revendications

1. Disjoncteur différentiel sensible à tous courants comportant un transformateur d'intensité somme (2) réalisé sous la forme d'une inductance (5) commandée par un courant de défaut (I_{F}), et un générateur de signaux rectangulaires (6), qui est raccordé par l'intermédiaire de deux bornes à une tension d'alimentation séparée et est connecté par l'une de ses sorties à l'inductance (5) ainsi que par son autre sortie à une capacité de mesure (8), l'inductance (5) formant avec la capacité de mesure (8) un circuit oscillant série, dont la puissance absorbée par le générateur de signaux rectangulaires (6) peut être modifiée au moyen de l'amplitude du courant de défaut (I_{F}) et dont la capacité de mesure (8) est connectée, par ses deux bornes, aux entrées d'un redresseur, dont les sorties sont reliées à un dispositif comparateur du circuit de déclenchement, caractérisé par le fait que les bornes de la capacité de mesure (8) sont raccordées aux entrées d'un redresseur double alternance (21), qui est formé par des diodes (22 à 25) et dont les sorties sont raccordées aux deux entrées d'un comparateur (34) utilisé comme dispositif comparateur, que pour la compensation de l'allure en température des diodes (22 à 25) du redresseur double alternance (21), un courant de compensation (I_{K}), qui est indépendant du courant de défaut (I_{F}) et qui possède une intensité qui dépend de la température, est prédéterminé pour son application au comparateur (34), le potentiel dérivé du courant de défaut étant à cet effet mélangé, en amont de l'entrée du comparateur (34), au potentiel produit par le courant de compensation (I_{K}).

2. Disjoncteur différentiel suivant la revendication 1, dans lequel le circuit de mesure (20) est constitué par un montage série du redresseur double alternance (21) avec des résistances de polarisation (26, 27), caractérisé par le fait qu'en parallèle sur le circuit de mesure (20) il est prévu un diviseur de tension (40), comportant des bornes raccordées à la tension d'alimentation séparée (Uₒ) et qui comporte au moins une résistance qui dépend de la température et qui délivre le courant de compensation (I_{K}).

3. Disjoncteur différentiel suivant la revendication 2, caractérisé par le fait qu'au moins une diode (43, 44) est prévue en tant que résistance dépendant de la température.

4. Disjoncteur différentiel suivant la revendication 3, caractérisé par un circuit série formé de diodes (43, 44) du même type que les diodes (22 à 25) du redresseur double alternance (25).
